# FASCICULE DE BREVET EUROPEEN

(11) **EP 1 978 376 B1**
(45) Date de publication et mention de la délivrance du brevet: **31.10.2012**
(21) Numéro de dépôt: 08103254.2
(22) Date de dépôt: 31.03.2008
(51) Int. Cl.: G01V 8/18, G01S 7/481, G01S 7/499, G01S 17/42, G01V 8/26

(54) **Tête de veille active d'un environnement avec balayage en site, système de veille comportant la tête précitée, et procédé de mise en oeuvre de la tête et du système**
Aktiver Überwachungskopf einer Umgebung mit Strahlschwenkung vor Ort, Überwachungssystem, das mit einem solchen Kopf ausgestattet ist, und Verfahren zur Anwendung dieses Kopfs und des Systems
Head for active surveillance of an environment with on-site scanning, surveillance system comprising the aforementioned head, and method for implementing the head and the system

(30) Priorité: 06.04.2007 FR 0754368
(43) Date de publication de la demande: 08.10.2008
(73) Titulaire: SAGEM DEFENSE SECURITE, 75015 Paris (FR)
(72) Inventeur: Michel, Anne-Marie c/o Sagem Défense Sécurité, 75015 Paris (FR); Robert, Patrick c/o Sagem Défense Sécurité, 75015 Paris (FR)
(74) Mandataire: Callon de Lamarck, Jean-Robert

(56) Documents cités:
- EP-A- 0 642 034
- WO-A-2006/115397
- DE-A1- 3 815 373
- GB-A- 2 203 539
- US-A- 4 714 339
- US-A- 5 086 411
- US-A- 5 114 226
- US-A1- 2006 132 635

## Description

La présente invention concerne une tête de veille active d'un environnement, comportant :
- un boîtier;
- un bloc d'émission d'un faisceau d'illumination apte à balayer un secteur de l'environnement selon une première direction ; et
- un bloc de réception d'un faisceau de détection en retour.
   Elle concerne également un système de veille comportant la tête précitée et un procédé de mise en oeuvre de la tête et du système.

### ETAT DE L'ART

Une tête de veille active a pour fonction de détecter des objets diffusants/réfléchissants et/ou des points particuliers d'un environnement, à fort coefficient de rétrodiffusion/rétroréflexion. Dans ce dernier cas, ces points sont caractérisés par leur SEL (Surface Equivalente Laser) élevée.

Ainsi, un des buts d'une tête de veille active est de détecter par exemple des optiques pointées appartenant à des appareils ou à des projectiles menaçant un véhicule, afin que le véhicule puisse les esquiver par exemple ou mettre en oeuvre des contre-mesures.

A cet effet, les têtes de veille active connues comportent un boîtier monté sur un véhicule, un bloc d'émission d'un faisceau d'illumination et un bloc de réception d'un faisceau de détection en retour.

En général, le bloc d'émission est mobile par rapport au boîtier, et est adapté pour permettre le balayage en site et en gisement d'un secteur de l'environnement à surveiller. Le secteur de veille à surveiller peut être de taille relativement importante. Le faisceau d'illumination est préférentiellement peu divergent (couvrant par exemple un secteur angulaire de l'environnement typiquement de l'ordre de 3°x3°), de sorte que l'énergie par unité d'angle solide soit importante, ce qui assure une grande portée du faisceau dans l'environnement.

Le bloc de réception est également en général mobile par rapport au boîtier et doit suivre le balayage en site et en gisement de l'illumination.

Une telle tête comporte cependant des inconvénients.

Tout d'abord, l'inertie importante du bloc d'émission et du bloc de réception pénalise la cadence de rafraîchissement du secteur de l'environnement et donc augmente la durée nécessaire à la détection des optiques pointées. L'inertie du bloc de réception est d'autant plus importante que la pupille de détection est généralement de grande dimension pour assurer un bilan photométrique favorable à la portée du système.

Ensuite, du fait du caractère mobile du bloc de réception, la position angulaire du bloc de réception par rapport au boîtier n'est pas connue précisément. Cette imprécision sur la position angulaire du bloc de réception peut provoquer une erreur dans l'estimation de la position des objets et/ou des optiques pointées détectées, et par conséquent peut pénaliser les performances des contre-mesures et mettre en danger la sécurité du véhicule sur lequel le boîtier est monté.

On connaît ainsi par US 2006/132635 un dispositif de télémétrie comportant
- une voie optique d'émission comportant au moins un élément mobile par rapport à un carter comportant la source d'illumination par exemple, et
- une voie optique de réception comportant également au moins un élément mobile par rapport au carter.

En général, l'élément mobile est commun à la voie optique d'émission et à la voie optique de réception (boîtier tournant ou miroir pivotant).

Du fait de l'imprécision inhérente à la présence de l'élément mobile, notamment sur la voie optique de réception, la précision de la position du faisceau de détection sur une matrice d'un détecteur n'est pas optimale et peut nuire aux performances de la tête de veille active.

On connaît par ailleurs par EP 0 642 034 un dispositif de télémétrie par triangulation, où le bloc de réception et le bloc d'émission sont fortement éloignés l'un de l'autre.

Un tel dispositif ne permet pas de détecter une SEL.

### PRESENTATION DE L'INVENTION

L'invention propose de pallier au moins un de ces inconvénients.

A cet effet, on propose selon l'invention une tête de veille active selon la revendication 1.

L'invention est avantageusement complétée par les caractéristiques des revendications 2 à 10.

L'invention concerne également un système de veille comportant la tête précitée et un procédé de mise en oeuvre de la tête et du système.

L'invention présente de nombreux avantages.

La tête de veille selon l'invention présente une grande portée. Elle présente en effet une énergie par unité d'angle solide comparable, voire supérieure, à celle des têtes de l'art antérieur.

La fréquence de détection par le bloc de réception est importante et correspond à la fréquence de pulsation d'illumination. Elle peut atteindre plusieurs kHz. Cet avantage est préférentiellement atteint grâce à l'illumination suivant un bandeau étroit en site, ce qui permet un fenêtrage rapide des détecteurs du bloc de réception.

Du fait de la position fixe des détecteurs par rapport au boîtier, la précision angulaire de détection est améliorée par rapport à l'art antérieur.

De plus, seul un balayage en site limité au faisceau d'illumination est nécessaire, ce qui est facilement réalisable techniquement. Le système est quasi-statique, rapide, peu onéreux, et de volume bien plus faible que les configurations réalisant un balayage opto-mécanique selon l'art antérieur.

La vitesse de balayage en site est de plus réglable. La possibilité de réglage de la vitesse de balayage permet à un utilisateur de la tête de veille d'adapter ladite vitesse de balayage au type de menace. Si la menace est représentée par des projectiles présentant une vitesse de défilement faible, la vitesse de balayage en site peut être relativement faible. La vitesse de balayage peut être plus rapide si le projectile a une vitesse de défilement plus importante. Dans le cas de projectiles à SEL modulable par exemple, il est possible, grâce à d'une part une vitesse de balayage en site adaptée et d'autre part une fréquence de détection élevée, d'obtenir un recouvrement de l'optique pointée suffisant pour distinguer la modulation de ladite SEL. Dans le cas de SEL non modulées, le taux de recouvrement peut être réduit pour augmenter la cadence de rafraîchissement de l'environnement par les détecteurs.

En résumé, l'invention permet de surveiller un secteur de l'environnement important, typiquement de quelques degrés en site et plusieurs dizaines de degrés en gisement (typiquement 90°, 120°, 180°, voire tout l'espace environnant pour une vision panoramique). La surveillance de l'environnement s'effectue avec à la fois :
- une résolution angulaire importante (de l'ordre de 100 µrad),
- une portée importante due à l'intensité d'illumination et à l'emploi de plusieurs capteurs dont la pupille d'entrée est importante, et
- un passage sur chaque point du secteur de veille le plus répétitif possible, d'une part grâce à la fréquence de pulsation de l'émission et d'autre par grâce à la vitesse de balayage.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente schématiquement un système comportant une tête de veille selon l'invention ;
- les figures 2A et 2B représentent schématiquement une vue en perspective d'un bloc d'émission selon l'invention ;
- les figures 3A et 3B représentent schématiquement le principe de balayage en site dans un bloc selon les figures 2A et 2B ;
- les figures 4A et 4B représentent schématiquement le principe de variation de la hauteur du bandeau d'illumination dans un bloc selon les figures 2A et 2B ;
- les figures 5 et 6 représentent schématiquement un bloc de réception selon l'invention, comportant avantageusement une pluralité de détecteurs ;
- la figure 7 représente schématiquement le principe de la définition d'une fenêtre de détection autour d'une partie éclairée d'une matrice de détection d'un détecteur d'une tête selon l'invention,
- les figures 8A et 8B montrent respectivement une vue de dessus et une vue de côté d'une tête présentant un secteur de veille de 360°, et
- la figure 9 représente une variante d'une tête selon l'invention.

Sur l'ensemble des figures, les éléments similaires portent des références numériques identiques.

### DESCRIPTION DETAILLEE

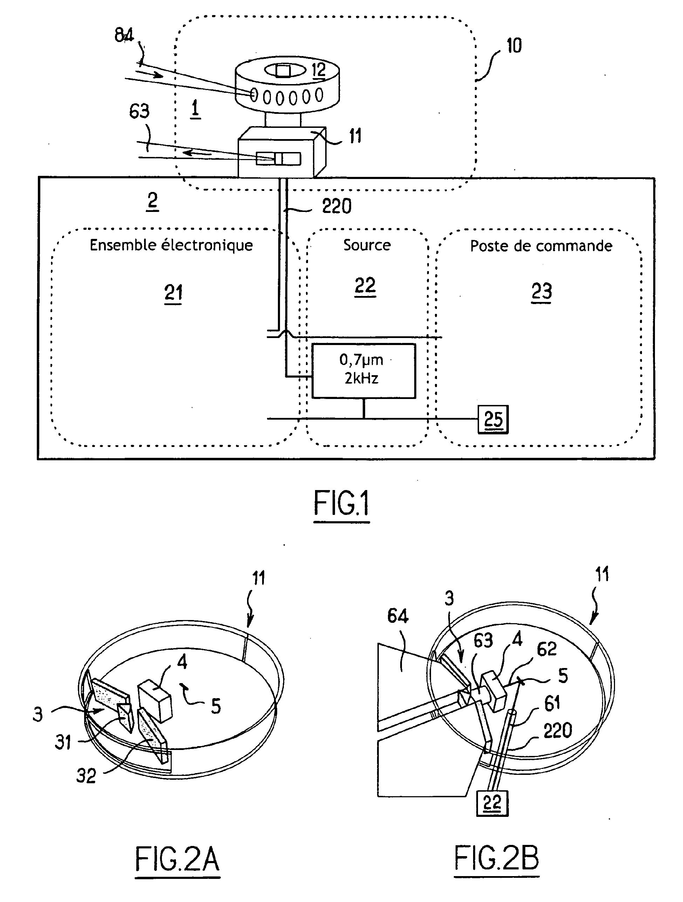

La figure 1 montre schématiquement une tête 1 de veille active d'un environnement en site et en gisement.

On rappelle que le « site » est l'une des coordonnées verticales. Le site correspond à l'angle de la demi-droite passant par la tête 1 et dirigée vers l'objet repéré, avec sa projection sur le plan horizontal passant par la tête 1. Cet angle est compté positivement quand l'objet repéré est au-dessus du plan horizontal indiqué, négativement dans le cas contraire. Le « gisement » est quant à lui l'angle de deux demi-plans limités par la verticale de la tête 1, l'un étant dirigé vers l'objet repéré et l'autre étant un demi-plan vertical de référence spécifié, le sens positif de rotation étant le plus souvent celui des aiguilles d'une montre.

La tête de veille 1 est montée sur un carter 2, le carter étant par exemple solidaire d'un véhicule.

Le carter 2 comporte un ensemble électronique 21, une source d'illumination 22 et un poste de commande 23, reliés entre eux et à la tête 1.

L'ensemble électronique 21 comporte toutes les cartes électroniques de processeur et de traitement. Ces éléments sont connus en eux-mêmes par l'homme du métier et ne sont pas décrits en détails dans la suite de la présente description.

La source 22 comporte également un banc optique pour fournir le faisceau d'illumination. La source 22 est très avantageusement pulsée et sera décrite plus en détails dans la suite de la présente description.

Le poste de commande 23 comporte principalement des dispositifs de commande de l'ensemble 21, de la source 22 et de la tête 1, ainsi que des dispositifs de visualisation de l'environnement. Le poste de commande 23 sera décrit plus en détails dans la suite de la présente description.

La tête 1 comporte un boîtier 10 fixe par rapport au carter 2, un bloc d'émission 11 d'un faisceau d'illumination 63, le faisceau 63 étant apte à balayer l'environnement en site, et un bloc de réception 12 d'un faisceau 84 de détection en retour.

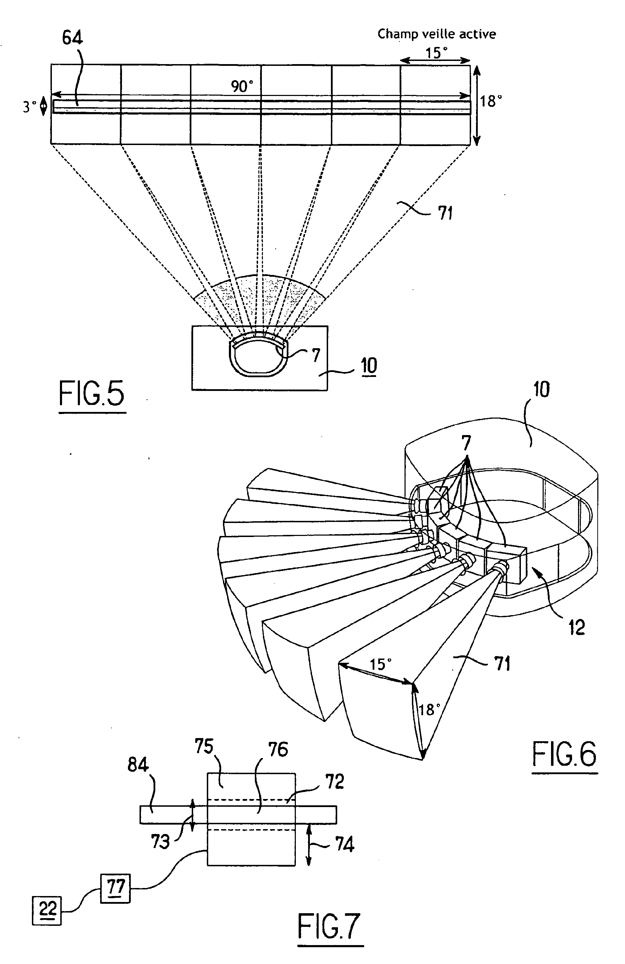

Le bloc de réception 12 est situé à proximité du bloc 11 d'émission, pour minimiser l'effet hors d'axe d'un faisceau rétrodiffusé/rétroréfléchi par une optique pointée. En d'autres termes, et comme le montrent les figures 1 et 5, le champ d'émission du bloc d'émission est colinéaire et en grande partie inclus dans le champ de détection du bloc de réception.

Comme le montrent les figures 2A, 2B, 3A, 3B, 4A et 4B, le bloc 11 d'émission comporte un disperseur 3 adapté pour mettre en forme le faisceau d'illumination 63 sous forme d'un bandeau 64 d'illumination de l'environnement.

Le bandeau 64 a une largeur importante en gisement et une hauteur étroite en site. On comprend que plus la largeur du bandeau 64 en gisement est importante, plus le secteur angulaire de l'environnement détecté est important également. Préférentiellement, le secteur angulaire en gisement est typiquement de l'ordre de 90°.

Bien entendu, d'autres valeurs peuvent être possibles pour le secteur de veille, comme par exemple 120°, 180°, voire 360°, par exemple en utilisant des déflecteurs adéquats et un jeu de miroirs et de lames semi-transparentes adéquats.

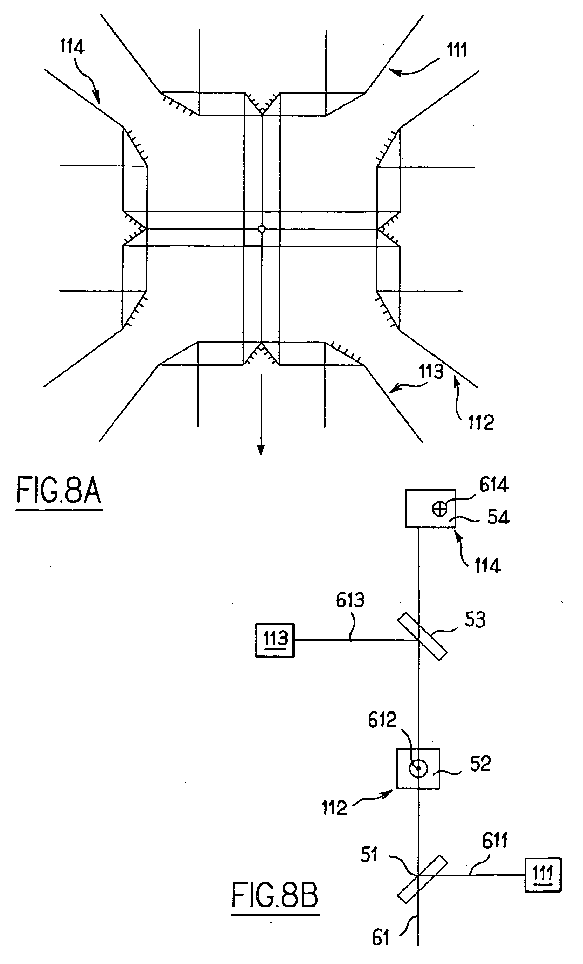

Les figures 8A et 8B montrent respectivement une vue de dessus et une vue de côté d'une tête présentant un secteur de veille supérieur à 90°, en l'occurrence 360°, grâce à la présence de quatre blocs d'émission, couvrant chacun 90° et étant notés respectivement 111, 112, 113 et 114. A cet effet, un faisceau d'illumination 61 issu d'une source est séparé par un miroir 51 semi-réfléchissant (taux de transmission 75% et taux de réflexion 25%) de sorte que le faisceau 611 réfléchi soit dirigé vers le bloc 111. Le faisceau transmis par le miroir 51 est séparé par un miroir 52 semi-réfléchissant (taux de transmission 67% et taux de réflexion 33%) de sorte que le faisceau 612 réfléchi soit dirigé vers le bloc 112. Le faisceau transmis par le miroir 52 est séparé par un miroir 53 semi-réfléchissant (taux de transmission 50% et taux de réflexion 50%) de sorte que le faisceau 613 réfléchi soit dirigé vers le bloc 113. Le faisceau transmis par le miroir 51 est réfléchi par un miroir 54 de sorte que le faisceau 614 réfléchi soit dirigé vers le bloc 112. Grâce au choix des taux de transmission et de réflexion de chaque miroir, chaque bloc émet une illumination de même intensité que les autres blocs.

Le fait que la hauteur en site du bandeau 64 est faible par rapport à la largeur en gisement permet une portée importante du faisceau (de l'ordre de 5 km), car cette dernière est liée à l'énergie d'illumination par unité d'angle solide. Typiquement, le secteur angulaire en site du bandeau 64 est de l'ordre de 1,4 mrad (0,09°).

Le rapport entre la largeur en gisement sur la hauteur en site du bandeau est ainsi supérieur à 100, préférentiellement supérieur 500, et très préférentiellement supérieur à 1000.

Le balayage en site par le bandeau 64 permet d'explorer un secteur angulaire total de l'ordre de 3° par exemple.

Préférentiellement, le bloc d'émission 11 comporte un déviateur opto-mécanique de faible inertie par rapport à l'inertie du boîtier 10 et apte à dévier le bandeau 64 d'illumination pour que ledit bandeau 64 puisse effectuer le balayage du secteur. Le fait que l'inertie du déviateur (décrit plus en détails dans la suite de la présente description) soit faible par rapport à l'inertie du boîtier permet d'effectuer un balayage de l'ordre de quelques dizaines de Hz, mais couvrir la gamme 0.1 Hz à 50 Hz.

Comme le montrent les figures 5 et 6, le bloc 12 de réception comporte au moins un détecteur 7 fixe par rapport au boîtier 10.

De plus, comme le montre la figure 1, la voie optique du bloc de détection 12, comportant notamment les détecteurs fixes 7, est distincte de la voie optique du bloc d'émission. La voie optique du bloc de réception ne comporte notamment pas le déviateur opto-mécanique de la voie d'émission. L'ensemble des éléments de la voie du bloc de réception est fixe par rapport au boîtier.

Le nombre de détecteurs 7 peut être quelconque, et dépend du champ de détection en gisement de chaque détecteur 7 par rapport au secteur angulaire total de l'environnement à surveiller.

Avec des détecteurs 7 pouvant couvrir par exemple un champ de 15° en gisement, le bloc 12 de réception comporte six détecteurs 7 dont les champs contigus couvrent le secteur angulaire total souhaité en gisement, à savoir les 90° souhaités. La couverture angulaire en site doit bien entendu être supérieure aux 3° souhaités, ce qui est facilement réalisables techniquement. Les détecteurs connus ont une couverture en site de l'ordre de 18°. En cas de mouvement angulaire important du véhicule (navire ou porteur terrestre), il est ainsi possible de compenser les mouvements du véhicule sur une plage angulaire de ±7.5° (ce qui est suffisant pour compenser les mouvements des navires en mer par exemple). Afin d'optimiser le bilan photométrique, l'ouverture numérique des détecteurs est élevée et proche de 1,2.

Les détecteurs 7 peuvent être de tout type, mais sont par exemple du type CMOS (Complementary Metal-Oxide Semiconductor). Dans ce cas, ils comportent une matrice 75 de détection (visible à la figure 7) d'environ 4 millions de pixels et leur vitesse de transfert est de l'ordre de 60 MHz. Les détecteurs 7 sont préférentiellement rendus monochromes par filtrage optique et de grande dimension. Les pixels de la matrice 75 sont de faible dimension, et la résolution angulaire du détecteur est de l'ordre de 100 µrad. Tous les pixels de la matrice intègrent le flux optique au même moment. Il faut noter que les détecteurs connaissent une amélioration constante de leurs caractéristiques techniques ce qui permettra au système futurs basés sur le même principe de réaliser de meilleures performances.

La division du secteur en six champs de 15° permet d'utiliser un filtre passe-bande optique particulièrement étroit (environ 7 nm), ce qui est très favorable à la réjection du flux solaire, réjection qui est indispensable pour une utilisation de la tête 1 en milieu maritime par exemple, ou pour obtenir des performances de détection compatibles d'une portée importante, de jour comme de nuit, et par temps ensoleillé comme par temps couvert. Sur la voie de détection, le filtre est préférentiellement placé en amont des dispositifs optiques, car cela correspond à la zone pour laquelle l'incidence de faisceau de détection est la plus faible.

On rappelle que la source 22 est préférentiellement pulsée. La matrice 75 de détection des détecteurs est apte à être éclairée par le faisceau 84 de détection et détecter ledit faisceau 84 à la fréquence de pulsation du faisceau de détection.

Chaque détecteur 7 comporte en outre un synchroniseur 77 (visible à la figure 7) apte à synchroniser d'une part une fréquence de détection du faisceau 84 de détection par la matrice 75 avec d'autre part une fréquence de pulsation de la source 22 d'illumination. En d'autres termes, le synchroniseur 77 est apte à synchroniser le déclenchement des périodes d'intégration du faisceau 84 reçu en retour par rapport aux pulsations d'émission du faisceau 63 d'illumination. Il faut en effet préférentiellement une fréquence de détection du faisceau de détection élevée pour obtenir une tête 1 de veille performante. A cet effet, le synchroniseur 77 permet d'obtenir une détection du faisceau de détection 84 synchronisée avec l'émission du faisceau d'illumination 63. La fréquence de pulsation de la source 22 est préférentiellement de l'ordre du kHz (par exemple 2kHz), et la fréquence de détection est identique, ce qui est notamment possible grâce au fenêtrage des capteurs par exemple, fenêtrage décrit dans la suite.

La source 22 peut être quelconque et émettre un faisceau sur des domaines visibles ou infrarouges.

La source 22 peut émettre également plusieurs longueurs d'onde différentes simultanément. Les détecteurs sont alors bien entendu capables de détecter les différentes longueurs d'onde.

On souhaite pourtant pouvoir effectuer une détection à une longueur d'onde de 706 nanomètres. Cette longueur d'onde permet en effet l'emploi les détecteurs 7 extrêmement courants à base de silicium précités.

Cependant, l'utilisation de tels détecteurs pour des applications de veille active impose une intégration synchrone de tous les pixels de la matrice 75 dans la zone de détection d'illumination. Etant donné que la matrice 75 de détection du détecteur 7 est de grande dimension, mais n'est éclairée que sur une partie 76 par le faisceau 84 de détection (on rappelle que la hauteur du bandeau est de l'ordre de 1.4 mrad alors que les détecteurs ont une couverture en site de 18°), chaque détecteur 7 est adapté pour définir une fenêtre 72 de détection autour de la partie 76 éclairée de la matrice 75 (la hauteur 73 de la fenêtre 72 est légèrement supérieure à la hauteur de la partie 76 pour que la détection soit complète). Chaque détecteur est adapté en outre pour déplacer continûment ladite fenêtre 72 pour suivre un déplacement de la partie 76 éclairée de la matrice 75. On dit alors que le détecteur est « fenêtrable ». Le fenêtrage permet de réaliser l'intégration et le transfert des pixels de la fenêtre 72 à la fréquence de la source 22, soit de l'ordre du kHz. En d'autres termes, le fait de n'utiliser qu'une partie des pixels compris dans la fenêtre 72 de détection autour de la partie éclairée 76 de la matrice 75, permet l'intégration du flux optique, par le détecteur 7, sur ladite partie 76 des pixels, et à une fréquence compatible avec la fréquence de pulsation de la source 22. Chaque détecteur est capable de déplacer la fenêtre 72 de détection, comme le montre la flèche 74, pour que la partie éclairée 76 soit toujours située dans la fenêtre 72 de détection. La hauteur de la partie 76 est de l'ordre de quelques mrad, alors que les détecteurs ont une couverture en site de plusieurs degrés d'angle.

Avantageusement, la définition et le déplacement de la fenêtre 72 de détection sont commandés par le synchroniseur 77.

Très préférentiellement, la source 22 d'illumination est une source de type laser. La source laser émet un faisceau à 706 nanomètres avec un diamètre de 15 mm et avec une divergence inférieure à 0,5 mrad. La source 22 comporte un laser de pompe de type Nd :YLF, pompé par des diodes et refroidi par une circulation d'eau. Le choix du YLF, comme matrice hôte, permet d'obtenir des performances optimisées pour une fréquence de pulsation de l'ordre du kHz.

On rappelle que la vitesse de balayage du secteur total en site (également appelée « pistage moyen terme » ou « cadence de rafraîchissement ») peut atteindre quelques dizaines de Hz. Elle peut aussi être commandée à des fréquences bien plus basses, et ainsi couvrir la gamme 0.1 Hz à 50 Hz.

La fréquence de pulsation du laser permet d'éclairer le secteur avec un certain taux de recouvrement (le taux de recouvrement minimal est de l'ordre de 3, mais avantageusement ledit taux est de l'ordre de quelques dizaines) ce qui permet d'améliorer la qualité de détection des optiques pointées, en particulier lorsque celles-ci sont modulées, ce qui est le cas des dispositifs autodirecteurs des missiles.

On comprend que la hauteur du bandeau 64 d'illumination joue également un rôle dans la valeur du taux de recouvrement.

La vitesse de balayage en site et la hauteur du bandeau sont réglables, comme expliqué ci-dessous.

Comme le montrent les figures 2A, 2B, 3A et 4A, le bloc 11 d'émission comporte un déviateur comportant un bloc optique 4 comprenant un actionneur 43 apte à permettre le balayage de l'environnement en site par le faisceau d'illumination. L'actionneur 43 est apte à être commandé pour faire varier la vitesse de balayage avec laquelle le faisceau d'illumination balaie l'environnement en site.

Le bloc optique 4 est afocal, ce qui permet de réduire la divergence du faisceau issu de la source 22.

L'actionneur 43 peut actionner plusieurs types de dispositifs pour permettre le balayage de l'environnement par le faisceau d'illumination.

Cependant, avantageusement, le bloc optique 4 comporte au moins une première lentille 41 divergente mobile par rapport au boîtier 10, transversalement à l'axe optique 44 du bloc optique 4 comme le montre la flèche 410. La première lentille 41 est reliée à l'actionneur 43 qui est adapté pour déplacer ladite première lentille 41 pour effectuer le balayage en site par le bandeau 64 selon la flèche 411.

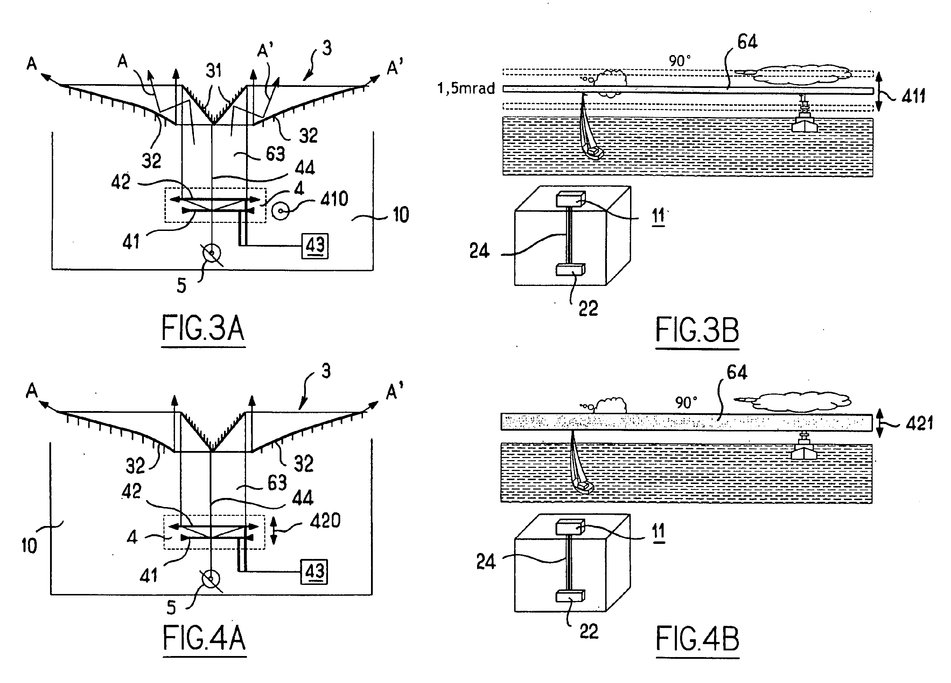

Le bloc optique 4 comprend également par exemple au moins une deuxième lentille 42 convergente mobile par rapport au boîtier 10, parallèlement à l'axe optique 44 du bloc optique 4 selon la flèche 420 comme le montre la figure 4A. La deuxième lentille 42 est reliée à l'actionneur 43, l'actionneur étant adapté pour déplacer ladite deuxième lentille 42 pour le réglage de la focalisation du bloc 4 et pour permettre ainsi une variation de la hauteur du bandeau 64 selon la flèche 421.

Les déplacements des première et deuxième lentilles 41 et 42 sont très faibles et effectuées à des fréquences maximales de quelques dizaines de Hz, ce qui fait que la conception opto-mécanique de la tête de veille est simple, car quasi-statique. Les lentilles 41 et 42 sont de plus de petite dimension, et sont par conséquent déplaçables aisément. Le déplacement de la lentille 41 peut être continu ou saccadé (mode « step and stare » selon la terminologie généralement utilisée par l'homme du métier), et s'effectuer toujours dans un même sens ou selon des sens opposés, pour effectuer des mouvements de va-et-vient..

La photométrie de la veille active est une loi proportionnelle à l'inverse de la distance à l'objet détecté élevée à la puissance 4. Ainsi, lorsque la tête observe un objet à courte ou moyenne distance, le bilan photométrique est très favorable. Dans cette situation, on peut décider d'augmenter la hauteur du bandeau 64 de façon à balayer plus rapidement ces zones à courte distance. On accélère ainsi la cadence de rafraîchissement du secteur. Ce type de fonctionnement est particulièrement aisé à mettre en oeuvre puisqu'il suffit de faire varier la commande de focalisation de l'illumination dans le bloc 4 en association avec le balayage en site de l'illumination. A l'inverse, une augmentation de la concentration est aisément possible, jusqu'à 0.5 mrad en site, ce qui augmente la portée du faisceau.

Comme le montre la figure 2B, la source laser 22 émet un faisceau 61 verticalement vers le bloc d'émission 11 placé au-dessus du carter 2.

Le faisceau 61 arrive sur un miroir de renvoi 5 qui permet d'envoyer un faisceau 62 orienté à 90° par rapport au faisceau 61. Le faisceau 62 entre ensuite dans le bloc optique 4. Le faisceau 63 en sortie du bloc optique 4 est envoyé sur le disperseur 3 connu en soi par l'homme du métier.

Le disperseur 3 comporte ainsi deux miroirs plan 31 disposés en forme de V et réfléchissant le faisceau 63 issu du bloc optique 4 sur deux miroirs asymétriques 32 pour la dispersion en gisement du faisceau comme le montrent les flèches A et A'. L'illumination est volontairement concentrée dans le bandeau 64. C'est cette concentration en site de l'illumination qui permet un bon bilan photométrique et assure au système de longues portées. Il est possible de générer une illumination homogène, quel que soit le profil du faisceau laser 63 en adaptant la pente locale des miroirs 32 du disperseur 3.

Comme le montre la figure 1, le système comportant une tête de veille selon l'invention comporte également un variateur 25 pour faire varier l'énergie d'illumination de la source 22 pendant le balayage en site du faisceau d'illumination. Le variateur 25 fait avantageusement partie du poste de commande 23. On peut ainsi prendre en compte, lors du balayage, la proximité par exemple d'un véhicule ami que l'on ne veut pas aveugler par le faisceau d'illumination.

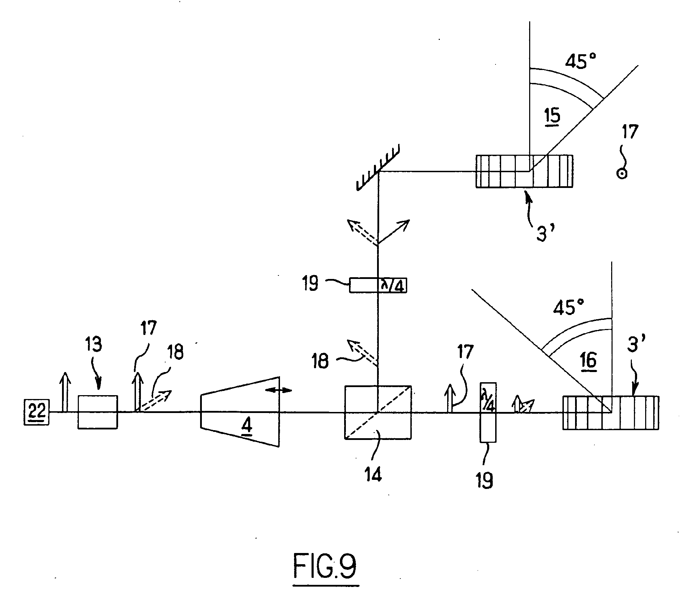

Les sources laser sont le plus souvent polarisées. On peut ainsi, selon une variante, représentée à la figure 9, faire varier la polarisation de l'illumination, par exemple par un ensemble 13 dit rotateur de Faraday et de prismes 14 séparateurs polarisés, afin d'illuminer en alternance deux demi-secteurs 15 et 16 de 45°. Dans ce cas, l'illumination est deux fois plus intense, ce qui améliore sensiblement la portée. Il faut noter que les deux demi-secteurs 15 et 16 sont émis dans une direction 17 perpendiculaire au plan de la figure 9.

On commande le rotateur de Faraday 13 pour que les polarisations 17 et 18 du faisceau polarisé soient distinctes avant d'entrer dans le bloc optique 4. Le prisme séparateur 14 transmet le faisceau pulsé 17 et réfléchit le faisceau pulsé 18 suivant leur polarisation. Les lames 19 en λ/4 rééquilibrent les polarisations sur les 2 axes. On place un disperseur 3' de 45° sur chaque voie d'émission, de sorte que les deux demi-secteurs 15 et 16 de 45° soient illuminés en alternance.

D'autres configurations utilisant des éléments dispersifs, comme par exemple des cellules de Pockells ou des composants acousto-optiques, permettent de dévier les impulsions sur un des deux disperseurs au choix.

Le champ en site des détecteurs, égal à 18°, correspond à un champ compatible avec une application au domaine maritime, notamment pour compenser les mouvements d'un bâtiment en cours de navigation.

La disposition des détecteurs selon la configuration 15° en gisement et 18° en site est imposée par la géométrie du fenêtrage du type de capteurs utilisé. D'autres configurations sont bien entendu possibles en fonction des détecteurs et de leurs possibilités de fenêtrage.

Les développements qui précèdent prévoient un balayage en site et un bandeau large en gisement. On comprend que le balayage peut être également effectué en gisement avec un bandeau large en site.

## Revendications

1. Tête (1) de veille active d'un environnement, comportant :
- un boîtier (10) statique ;
- un bloc d'émission (11) d'un faisceau pulsé d'illumination (63) apte à balayer un secteur de l'environnement selon une première direction, le bloc d'émission présentant une voie optique d'émission
le bloc (11) d'émission comportant en outre :
- un disperseur (3) adapté pour mettre en forme ledit faisceau d'illumination (63) sous forme d'un bandeau (64) d'illumination, le bandeau ayant une largeur importante selon une deuxième direction et une hauteur étroite selon la première direction ; et
- un déviateur (41, 43) opto-mécanique mobile par rapport au boîtier (10) et de faible inertie par rapport à l'inertie du boîtier (10), et apte à dévier, selon ladite première direction, le bandeau (64) d'illumination pour que ledit bandeau (64) puisse effectuer le balayage du secteur ; et
- un bloc de réception (12) d'un faisceau (84) pulsé de détection en retour, le bloc de réception présentant une voie optique de détection et étant en outre situé à proximité du bloc (11) d'émission par rapport à des dimensions du boîtier (10), pour minimiser l'effet hors d'axe du faisceau (84) en retour par rapport au faisceau (63) d'illumination,
la tête étant **caractérisée en ce que** :
la voie optique d'émission et la voie optique de détection sont distinctes l'une de l'autre et n'ont aucun élément en commun, la voie optique de détection ne comportant que des éléments fixes par rapport au boîtier.

2. Tête selon la revendication 1, dans laquelle le bloc (12) de réception comporte au moins un détecteur (7) fixe par rapport au boîtier (10), le détecteur comprenant une matrice (75) de détection apte à être éclairée par le faisceau (84) de détection et détecter ledit faisceau (84) à la fréquence de pulsation du faisceau de détection.

3. Tête selon la revendication 2, dans laquelle
- la matrice (75) de détection est apte à être éclairée sur une partie (76) par le faisceau (84) de détection, et
chaque détecteur (7) est adapté pour :
- définir une fenêtre (72) de détection autour de la partie (76) éclairé de la matrice (75), et
- déplacer continûment ladite fenêtre (72) pour suivre un déplacement de la partie (76) éclairée de la matrice (75).

4. Tête selon l'une des revendications 1 à 3, dans laquelle chaque détecteur (7) comporte en outre un synchroniseur (77) apte à synchroniser une fréquence de détection du faisceau de détection avec une fréquence de pulsation d'une source d'illumination pulsée.

5. Tête selon l'une des revendications 1 à 4, dans laquelle le déviateur (41, 43) opto-mécanique comporte un bloc optique (4) comprenant un actionneur (43) apte à permettre le balayage du secteur de l'environnement selon la première direction par le faisceau d'illumination (63).

6. Tête selon la revendication 5, dans laquelle l'actionneur (43) est apte à être commandé pour faire varier la vitesse de balayage avec laquelle le faisceau d'illumination (63) balaie le secteur de l'environnement selon la première direction.

7. Tête selon l'une des revendications 5 ou 6, dans laquelle le bloc (4) optique comporte au moins une première lentille (41) mobile par rapport au boîtier (10) et reliée à l'actionneur (43), l'actionneur étant adapté pour déplacer ladite première lentille, éventuellement avec une vitesse de déplacement variable.

8. Tête selon l'une des revendications 5 à 7, dans laquelle le bloc (4) optique comprend au moins une deuxième lentille (42) mobile par rapport au boîtier (10) et reliée à l'actionneur (43), l'actionneur étant adapté pour déplacer ladite deuxième lentille pour permettre une variation de la hauteur du bandeau (64).

9. Tête selon l'une des revendications 1 à 8, comportant au moins un rotateur de Faraday, une cellule de Pockells ou un composant acousto-optique et au moins un prisme séparateur polarisé, afin d'illuminer en alternance deux demi secteurs de l'environnement.

10. Tête selon l'une des revendications 1 à 9, dans laquelle la première direction est le site de l'environnement et la deuxième direction est le gisement de l'environnement.

11. Système de veille active d'un environnement, comportant une source (22) d'illumination pulsée, **caractérisé en ce qu'**il comporte une tête selon l'une des revendications 1 à 10.

12. Système selon la revendication 11, dans lequel la source (22) est polarisée.

13. Système selon l'une des revendications 11 ou 12, comportant un variateur (25) pour faire varier l'énergie d'illumination de la source (22) pendant le balayage du secteur de l'environnement par le bandeau (64) d'illumination.

14. Système selon l'une des revendications 11 à 13, comportant un filtre passe-bande optique.

15. Procédé de veille active d'un environnement, grâce à une tête (1) de veille comportant un boîtier (10) statique, un bloc d'émission (11) d'un faisceau (63) d'illumination pulsé et présentant une voie optique d'émission, et un bloc de réception (12) d'un faisceau (84) pulsé de détection en retour présentant une voie optique de détection et étant en outre situé à proximité du bloc (11) d'émission par rapport à des dimensions du boîtier (10), pour minimiser l'effet hors d'axe du faisceau (84) en retour par rapport au faisceau (63) d'illumination ;
le procédé comportant les étapes :
- d'émission du faisceau d'illumination (63) par le bloc d'émission ;
- de dispersion du faisceau d'illumination (63), par un disperseur (3) du bloc (11) d'émission, pour mettre en forme ledit faisceau d'illumination sous forme d'un bandeau (64) d'illumination, le bandeau ayant une largeur importante selon une deuxième direction et une hauteur étroite selon une première direction ;
- de balayage d'un secteur de l'environnement selon ladite première direction par le faisceau (63) grâce à un déviateur (41, 43) opto-mécanique mobile par rapport au boîtier (18) et de faible inertie par rapport à l'inertie du boîtier (10),
le procédé étant **caractérisé en ce qu'**il comporte les étapes :
- de réception du faisceau (84) de détection en retour, par le bloc de réception, la voie optique de détection étant distincte de la voie optique d'émission, ne comportant aucun élément en commun avec la voie optique d'émission et ne comportant que des éléments fixes par rapport au boîtier.

16. Procédé selon la revendication 15, dans lequel la réception s'effectue sur au moins un détecteur du bloc de réception, chaque détecteur étant fixe par rapport au boîtier (10), le détecteur comprenant une matrice (75) de détection apte à être éclairée par le faisceau (84) de détection et détecter ledit faisceau (84) à la fréquence de pulsation du faisceau de détection.

17. Procédé selon la revendication 16, comportant les étapes :
- de définition d'une fenêtre (72) de détection autour d'une partie (76) éclairée d'une matrice (75) de détection du détecteur, la partie (76) étant éclairée par le faisceau (84) de détection, et
- de déplacement continu de ladite fenêtre (72) pour suivre un déplacement de la partie (76) éclairée de la matrice (75).

18. Procédé selon l'une des revendications 15 à 17, comportant une étape de synchronisation, par un synchroniseur (77) du détecteur (7), de la fréquence de détection du faisceau de détection avec la fréquence de pulsation d'une source d'illumination pulsée.

19. Procédé selon l'une des revendications 15 à 17, comportant une étape de variation, grâce à un actionneur (43) du déviateur du bloc d'émission (11), de la vitesse de balayage avec laquelle le faisceau d'illumination (63) balaie le secteur de l'environnement selon la première direction.

20. Procédé selon l'une des revendications 15 à 19, comportant une étape de variation, grâce à un actionneur (43) du bloc d'émission (11), de la hauteur du bandeau (64).

21. Procédé selon l'une des revendications 15 à 20, comportant une étape de variation, grâce à un variateur (25) d'un système de veille comportant une source d'illumination pulsée et une tête selon l'une des revendications 1 à 10, de l'énergie d'illumination de la source (22) pendant le balayage en site du secteur de l'environnement par le bandeau (64) d'illumination.

22. Procédé selon l'une des revendications 15 à 21, comportant une étape de variation de la polarisation du faisceau (63) d'illumination, grâce à au moins un rotateur de Faraday, une cellule de Pockells ou un composant acousto-optique et au moins un prisme séparateur polarisé, afin d'illuminer en alternance deux demi secteurs de l'environnement.

23. Procédé selon l'une des revendications 15 à 22, dans lequel la première direction est le site de l'environnement et la deuxième direction est le gisement de l'environnement.

## Claims

1. Active environment surveillance head (1) comprising:
- a static box. (10);
- an emission block (11) to emit a pulsed illumination beam (63) capable of scanning a sector of the environment along a first direction, the emission block having an optical emission channel,
the emission block (11) also comprising:
- a disperser (3) adapted to shape said illumination beam (63) in the form of an illumination strip (64), the strip having a large width along a second direction and a low height along the first direction; and
- an opto-mechanical deviator (41,43) free to move relative to the box (10) and with a low inertia relative to the inertia of the box (10) and capable of deviating the illumination strip (64) along said first direction so that said strip (64) can scan the sector; and
- a reception block (12) to receive the return of a pulsed detection beam (84), the reception block having an optical detection channel and also being located relatively close to the emission block (11) in comparison with the dimensions of the box (10), to minimize the off-axis effect of the return beam (84) relative to the illumination beam (63),
the head being **characterized in that**:
the optical emission channel and the optical detection channel are distinct from each other and have no elements in common, the optical detection channel only comprising elements fixed relative to the box.

2. Head according to claim 1, in which the reception block (12) comprises at least one detector (7) fixed relative to the unit (10), the detector comprising a detection matrix (75) that can be illuminated by the detection beam (84) and that can detect said beam (84) at the pulse frequency of the detection beam.

3. Head according to claim 2, in which:
- the detection matrix (75) can be illuminated on one part (76) by the detection beam (84), and
each detector (7) is adapted to:
- define a detection window (72) around the illuminated part (76) of the matrix (75), and
- continuously displace said window (72) to follow a displacement of the illuminated part (76) of the matrix (75).

4. Head according to any one of claims 1 to 3, in which each detector (7) also comprises a synchronizer (77) capable of synchronizing a detection beam detection frequency with a pulse frequency of a pulsed illumination source.

5. Head according to any one of claims 1 to 4, in which the opto-mechanical deviator (41, 43) comprises an optical block (4) comprising an actuator (43) capable of scanning the environment sector along the first direction using the illumination beam (63).

6. Head according to claim 5, in which the actuator (43) can be controlled to vary the scanning rate at which the illumination beam (63) scans the environment sector along the first direction.

7. Head according to either claim 5 or 6, in which the optical block (4) comprises at least one first lens (41) free to move relative to the box (10) and connected to the actuator (43), the actuator being adapted so that it can displace said first lens, possibly at a variable speed.

8. Head according to one of claims 5 to 7, in which the optical block (4) comprises at least one second lens (42) free to move relative to the box (10) and connected to the actuator (43), the actuator being adapted so that it can displace said second lens to vary the height of the strip (64).

9. Head according to any one of claims 1 to 8, comprising at least one Faraday rotator, one Pockells cell or one acoustic-optical component and at least one polarized splitter prism in order to illuminate two half-sectors of the environment alternately.

10. Head according to any one of claims 1 to 9, in which the first direction is the elevation of the environment and the second direction is the bearing of the environment.

11. Active environment surveillance system comprising a pulsed illumination source (22), **characterized in that** it comprises a head according to any one of claims 1 to 10.

12. System according to claim 11, in which the source (22) is polarized.

13. System according to either claim 11 or 12, comprising a dimmer (25) to vary the illumination energy of the source (22) during scanning of the environment sector by the illumination strip (64).

14. System according to one of claims 11 to 13, comprising an optical pass-band filter.

15. Method for active surveillance of an environment using a surveillance head (1) comprising a static box (10), an emission block (11) that emits a pulsed illumination beam (63) with an optical emission channel, and a reception block (12) that receives the return of a pulsed detection beam (84), the reception block having an optical detection channel and also being located relatively close to the emission block (11) in comparison with the dimensions of the box (10), to minimize the off-axis effect of the return beam (84) relative to the illumination beam (63),
the method including the following steps:
- emission of the illumination beam (63) by the emission block;
- dispersion of the illumination beam (63) by a disperser (3) in the emission block (11), to shape said illumination beam into the shape of an illumination strip (64), the strip having a large width along a second direction and a low height along a first direction, and
- scanning of a sector of the environment along said first direction by the beam (63) using an opto-mechanical deviator (41,43) free to move relative to the box (10) and with a low inertia relative to the inertia of the box (10),
the method being **characterized in that** it comprises the following steps:
- reception of the returned detection beam (84) by the reception block, the optical detection channel being distinct from the optical emission channel and comprising no elements in common with the optical emission channel and only comprising elements fixed relative to the box.

16. Method according to claim 15, in which reception is made on at least one detector of the reception block, each detector being fixed relative to the box (10), the detector comprising a detection matrix (75) that can be illuminated by the detection beam (84) and detect said beam (84) at the pulse frequency of the detection beam.

17. Method according to claim 16, comprising the following steps:
- definition of a detection window (72) around an illuminated part (76) of a detection matrix (75) of the detector, the part (76) being illuminated by the detection beam (84), and
- continuous displacement of said window (72) to follow a displacement of the illuminated part (76) of the matrix (75).

18. Method according to one of claims 15 to 17, comprising a step in which a synchronizer (77) of the detector (7) synchronizes the detection frequency of the detection beam with the pulse frequency of a pulsed illumination source.

19. Method according to one of claims 15 to 17, comprising a step in which an actuator (43) of the deviator of the emission block (11) varies the scanning rate at which the illumination block (63) scans the sector of the environment along the first direction.

20. Method according to one of claims 15 to 19, comprising a step in which an actuator (43) of the emission block (11) varies the height of the strip (64).

21. Method according to one of claims 15 to 20, comprising a step in which a dimmer (25) of a surveillance system comprising a pulsed illumination source and a head according to one of claims 1 to 10, varies the illumination energy of the source (22) during scanning of the environment sector in elevation by the illumination strip (64).

22. Method according to one of claims 15 to 21, comprising a step in which at least one Faraday rotator, one Pockells cell or one acoustic-optical component and at least one polarized splitter prism, vary the polarization of the illumination beam (63) in order to alternately illuminate two half-sectors of the environment.

23. Method according to one of claims 15 to 22, in which the first direction is the elevation of the environment and the second direction is the bearing of the environment.

## Patentansprüche

1. Kopf (1) für die aktive Überwachung einer Umgebung, umfassend:
- ein statisches Gehäuse (10);
- einen Block zum Senden (11) eines gepulsten Lichtstrahlenbündels (63), das dafür geeignet ist, einen Bereich der Umgebung in einer ersten Richtung abzutasten, wobei der Sendeblock einen optischen Sendeweg aufweist,
wobei der Sendeblock (11) ferner Folgendes umfasst:
• einen Disperger (3), der dafür vorgesehen ist, das Lichtstrahlenbündel (63) in Form eines Lichtstreifens (64) zu formen, wobei der Streifen in einer zweiten Richtung eine erhebliche Breite hat und in der ersten Richtung eine schmale Höhe hat; und
• ein opto-mechanisches Umlenkelement (41, 43), das relativ zu dem Gehäuse (10) beweglich ist und eine relativ zu der Trägheit des Gehäuses (10) geringe Trägheit hat und dafür geeignet ist, den Lichtstreifen (64) in der ersten Richtung umzulenken, damit der Lichtstreifen (64) die Abtastung des Bereichs durchführen kann; und
- einen Block zum Empfangen (12) eines rückgeführten gepulsten Detektionsstrahlenbündels, wobei der Empfangsblock einen optischen Detektionsweg aufweist und ferner relativ zu Abmessungen des Gehäuses (10) in der Nähe des Sendeblocks (11) angeordnet ist, um die außeraxiale Wirkung des rückgeführten Strahlenbündels (84) relativ zu dem Lichtstrahlenbündel (63) zu minimieren,
wobei der Kopf **dadurch gekennzeichnet ist, dass**
der optische Sendeweg und der optische Detektionsweg sich voneinander unterscheiden und kein Element gemeinsam haben, wobei der optische Detektionsweg nur Elemente aufweist, die relativ zu dem Gehäuse ortsfest sind.

2. Kopf nach Anspruch 1, wobei der Empfangsblock (12) mindestens einen Detektor (7) aufweist, der relativ zu dem Gehäuse (10) ortsfest ist, wobei der Detektor eine Detektionsmatrix (75) umfasst, die dafür geeignet ist, durch das Detektionsstrahlenbündel (84) ausgeleuchtet zu werden und das Strahlenbündel (84) mit der Pulsfrequenz des Detektionsstrahlenbündels zu detektieren.

3. Kopf nach Anspruch 2, wobei
- die Detektionsmatrix (75) dafür geeignet ist, auf einem Teil (76) durch das Detektionsstrahlenbündel (84) ausgeleuchtet zu werden, und
- jeder Detektor (7) dafür vorgesehen ist,
• ein Detektionsfenster (72) um den ausgeleuchteten Teil (76) der Matrix (75) herum festzulegen, und
• das Fenster (72) kontinuierlich zu bewegen, um einer Bewegung des ausgeleuchteten Teils (76) der Matrix (75) zu folgen.

4. Kopf nach einem der Ansprüche 1 bis 3, wobei jeder Detektor (7) ferner eine Synchronisiereinrichtung (77) umfasst, die dafür geeignet ist, eine Detektionsfrequenz des Detektionsstrahlenbündels mit einer Pulsfrequenz einer gepulsten Lichtquelle zu synchronisieren.

5. Kopf nach einem der Ansprüche 1 bis 4, wobei das opto-mechanische Umlenkelement (41, 43) einen optischen Block (4) umfasst, der ein Stellglied (43) umfasst, das dafür geeignet ist, die Abtastung des Bereichs der Umgebung in der ersten Richtung durch das Lichtstrahlenbündel (63) zu ermöglichen.

6. Kopf nach Anspruch 5, wobei das Stellglied (43) betätigbar ist, um die Abtastgeschwindigkeit, mit welcher das Lichtstrahlenbündel (63) den Bereich der Umgebung in der ersten Richtung abtastet, zu verändern.

7. Kopf nach einem der Ansprüche 5 oder 6, wobei der optische Block (4) mindestens eine erste Linse (41) umfasst, die relativ zu dem Gehäuse (10) beweglich ist und mit dem Stellglied (43) verbunden ist, wobei das Stellglied dafür vorgesehen ist, die erste Linse, gegebenenfalls mit einer variablen Bewegungsgeschwindigkeit, zu bewegen.

8. Kopf nach einem der Ansprüche 5 bis 7, wobei der optische Block (4) mindestens eine zweite Linse (42) umfasst, die relativ zu dem Gehäuse (10) beweglich ist und mit dem Stellglied (43) verbunden ist, wobei das Stellglied dafür vorgesehen ist, die zweite Linse zu bewegen, um eine Veränderung der Höhe des Streifens (64) zu ermöglichen.

9. Kopf nach einem der Ansprüche 1 bis 8, der mindestens einen Faraday-Rotator, eine Pockels-Zelle oder eine akustisch-optische Komponente und mindestens ein Polarisationsteilerprisma aufweist, um abwechselnd zwei Halbbereiche der Umgebung auszuleuchten.

10. Kopf nach einem der Ansprüche 1 bis 9, wobei die erste Richtung die vertikale Richtung der Umgebung und die zweite Richtung die horizontale Richtung der Umgebung ist.

11. System für die aktive Überwachung einer Umgebung, umfassend eine gepulste Lichtquelle (22), **dadurch gekennzeichnet, dass** es einen Kopf nach einem der Ansprüche 1 bis 10 umfasst.

12. System nach Anspruch 11, wobei die Quelle (22) polarisiert ist.

13. System nach einem der Ansprüche 11 oder 12, das einen Regler (25) umfasst, um die Beleuchtungsenergie der Quelle (22) während der Abtastung des Bereichs der Umgebung durch den Lichtstreifen (64) zu verändern.

14. System nach einem der Ansprüche 11 bis 13, das einen optischen Bandpassfilter aufweist.

15. Verfahren zur aktiven Überwachung einer Umgebung mit Hilfe eines Überwachungskopfes (1), umfassend ein statisches Gehäuse (10), einen Block zum Senden (11) eines gepulsten Lichtstrahlenbündels (63), der einen optischen Sendeweg aufweist, und einen Block zum Empfangen (12) eines rückgeführten gepulsten Detektionsstrahlenbündels (84), der einen optischen Detektionsweg aufweist und ferner relativ zu Abmessungen des Gehäuses (10) in der Nähe des Sendeblocks (11) angeordnet ist, um die außeraxiale Wirkung des rückgeführten Strahlenbündels (84) relativ zu dem Lichtstrahlenbündel (63) zu minimieren;
wobei das Verfahren die folgenden Schritte umfasst:
- Senden des Lichtstrahlenbündels (63) durch den Sendeblock;
- Dispergieren des Lichtstrahlenbündels (63) durch einen Disperger (3) des Sendeblocks (11), um das Lichtstrahlenbündel in Form eines Lichtstreifens (64) zu formen, wobei der Streifen in einer zweiten Richtung eine erhebliche Breite hat und in einer ersten Richtung eine schmale Höhe hat; und
- Abtasten eines Bereichs der Umgebung in der ersten Richtung durch das Strahlenbündel (63) mit Hilfe eines opto-mechanischen Umlenkelements (41, 43), das relativ zu dem Gehäuse (10) beweglich ist und eine relativ zu der Trägheit des Gehäuses (10) geringe Trägheit hat,
wobei das Verfahren **dadurch gekennzeichnet ist, dass** es die folgenden Schritte umfasst:
- Empfangen des rückgeführten Detektionsstrahlenbündels (84) durch den Empfangsblock, wobei sich der optische Detektionsweg von dem optischen Sendeweg unterscheidet, mit dem optischen Sendeweg kein Element gemeinsam hat und nur Elemente aufweist, die relativ zu dem Gehäuse ortsfest sind.

16. Verfahren nach Anspruch 15, wobei der Empfang an mindestens einem Detektor des Empfangsblocks erfolgt, wobei jeder Detektor relativ zu dem Gehäuse (10) ortsfest ist, wobei der Detektor eine Detektionsmatrix (75) umfasst, die dafür geeignet ist, durch das Detektionsstrahlenbündel (84) ausgeleuchtet zu werden und das Strahlenbündel (84) mit der Pulsfrequenz des Detektionsstrahlenbündels zu detektieren.

17. Verfahren nach Anspruch 16, das die folgenden Schritte umfasst:
- Festlegen eines Detektionsfensters (72) um einen ausgeleuchteten Teil (76) einer Detektionsmatrix (75) des Detektors herum, wobei der Teil (76) durch das Detektionsstrahlenbündel (4) ausgeleuchtet wird, und
- kontinuierliches Bewegen des Fensters (72), um einer Bewegung des ausgeleuchteten Teils (76) der Matrix (75) zu folgen.

18. Verfahren nach einem der Ansprüche 15 bis 17, umfassend einen Schritt des Synchronisierens, durch eine Synchronisiereinrichtung (77) des Detektors (7), der Detektionsfrequenz des Detektionsstrahlenbündels mit einer Pulsfrequenz einer gepulsten Lichtquelle.

19. Verfahren nach einem der Ansprüche 15 bis 17, umfassend einen Schritt des Veränderns, mit Hilfe eines Stellglieds (43) des Umlenkelements des Sendeblocks (11), der Abtastgeschwindigkeit, mit welcher das Lichtstrahlenbündel (63) den Bereich der Umgebung in der ersten Richtung abtastet.

20. Verfahren nach einem der Ansprüche 15 bis 19, umfassend einen Schritt des Veränderns, mit Hilfe eines Stellglieds (43) des Sendeblocks (11), der Höhe des Streifens (64).

21. Verfahren nach einem der Ansprüche 15 bis 20, umfassend einen Schritt des Veränderns, mit Hilfe eines Reglers (25) eines Überwachungssystems, das eine gepulste Lichtquelle und einen Kopf nach einem der Ansprüche 1 bis 10 umfasst, der Beleuchtungsenergie der Quelle (22) während der Abtastung in vertikaler Richtung des Bereichs der Umgebung durch den Lichtstreifen (64).

22. Verfahren nach einem der Ansprüche 15 bis 21, umfassend einen Schritt des Veränderns der Polarisation des Lichtstrahlenbündels (63) mit Hilfe mindestens eines Faraday-Rotators, einer Pockels-Zelle oder einer akustisch-optischen Komponente und mindestens eines Polarisationsteilerprisma, um abwechselnd zwei Halbbereiche der Umgebung auszuleuchten.

23. Verfahren nach einem der Ansprüche 15 bis 22, wobei die erste Richtung die vertikale Richtung der Umgebung und die zweite Richtung die horizontale Richtung der Umgebung ist.
